# EUROPEAN PATENT APPLICATION

(11) **EP 1 087 535 A1**
(43) Date of publication of application: **28.03.2001**
(21) Application number: 00913106.1
(22) Date of filing: 04.04.2000
(51) Int. Cl.: H04B 1/04, H04B 7/26, H04J 13/02

(54) **RADIO TRANSMITTER AND POWER SUPPLY UNIT FOR RADIO TRANSMITTER**

(30) Priority: 06.04.1999 JP 9912099
(71) Applicant: KABUSHIKI KAISHA TOSHIBA, Kawasaki-shi, Kanagawa-ken 210-8572 (JP)
(72) Inventor: ISHIKAWA, Jiro B-401, Toshiba-Dai-4-Hirayamaryo, Hino-shi, Tokyo 191-0065 (JP)
(74) Representative: HOFFMANN - EITLE
(86) International application number: JP0002184
(87) International publication number: WO0060754

(57) **Abstract**

A radio transmitter comprises a data burst randomizer (19) for determining a transmission rate corresponding to a voice signal, an IF synthesizer (5) for generating an IF signal for modulating the voice signal, a modulator (6) for modulating the voice signal on the basis of the IF signal, a main synthesizer (9) for generating an RF signal for frequency conversion, a frequency converter (8) for subjecting the modulated signal to frequency conversion based on the RF signal, and amplifiers (12, 14) for amplifying and outputting the modulated signal. Power is supplied at least to the IF synthesizer (5), the modulator (6) and the frequency converter (8) at timings based on the determined transmission rate, and also based on periods required for settling the IF synthesizer (5) and the main synthesizer (9). By virtue of this structure, more reliable reduction of current consumption can be achieved, while securing stable operations of the synthesizers.

## Description

### Technical Field

This invention relates to a radio transmitter and a power supply control unit incorporated in the radio transmitter.

### Background Art

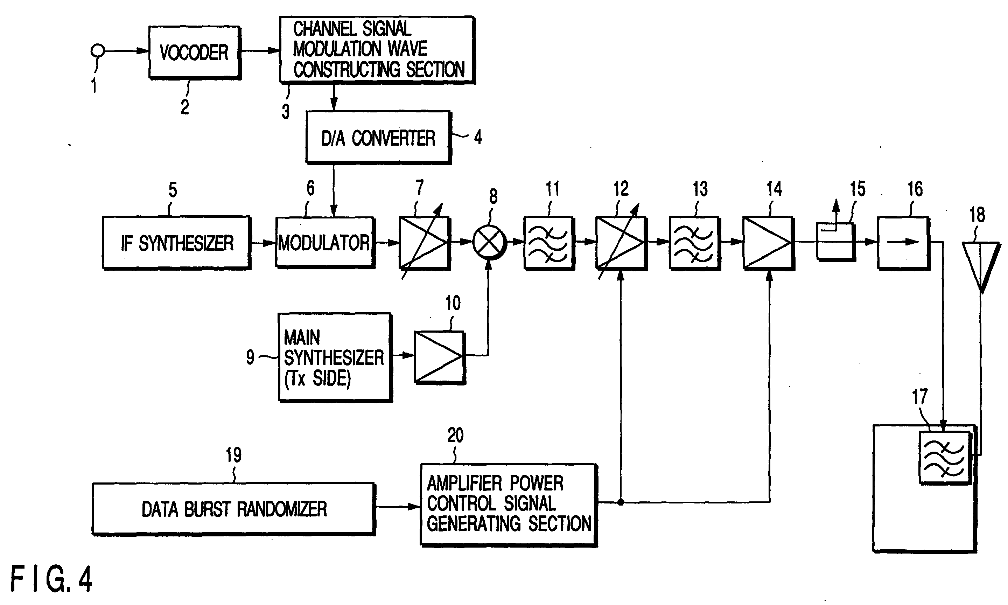

A radio transmitter of a CDMA (Code Division Multiple Access) system is known as one type of radio transmitter, in which the transfer rate is variable and selected on the basis of the ratio of voiced/voiceless sound of a vocoder. FIG. 4 shows a typical structure of a conventional radio transmitter.

As shown in FIG. 4, the radio transmitter comprises a voice signal terminal 1, a vocoder 2 connected thereto, a channel signal modulation wave constructing section 3 and a D/A converter 4. The transmitter further comprises an IF synthesizer 5, a modulator 6 connected thereto, an IF_AGC 7, a frequency converter 8, a main synthesizer 9, a buffer amplifier 10, a filter 11, a drive amplifier (hereinafter referred to as a "D_AMP") 12, a filter 13, a power amplifier (PA) 14, a coupler 15, an isolator (hereinafter referred to as an "ISO"), and an antenna sharing device 17 to be connected to an antenna 18.

The radio transmitter also comprises a data burst randomizer 19, and an amplifier power control signal generating section 20 connected thereto, and is adapted to supply power to the amplifiers at predetermined timings.

Since, in this radio transmitter, transfer is executed at a transfer rate corresponding to the ratio of voiced/voiceless sound of the vocoder, it is not necessary to always supply power to amplifiers 12 and 14, unless a full rate is selected. In other words, reduction in current consumption is aimed at by executing on/off control of each power supply at predetermined timings that are determined by the amplifier power control signal generating section 20 in accordance with a selected transfer rate.

In order to more completely reduce current consumption, it is necessary to appropriately turn on and off power supplies for a transmission system including the IF synthesizer 5, the modulator 6, the IF AGC 7, the frequency converter 8, the buffer amplifier 10, etc., in addition to the power supplies for the amplifiers 12 and 14. However, since in the prior art, the power supplies for the above-mentioned transmission system are controlled at the same timings as those for the amplifiers, the frequency used in the main synthesizer 9, which is also related to the receiver side, will deviate as a result of the influence of a change in the load on the buffer amplifier 10.

### Disclosure of Invention

It is the object of the invention to provide a radio transmitter capable of more reliably reducing current consumption while securing stable operations of main and IF synthesizers, by supplying power to transmission units at timings determined in light of the time required for re-settling of the frequency of the main synthesizer, or the rising time of the IF synthesizer at the time of power on, as well as in light of a selected transfer rate.

The invention provides a radio transmitter comprising:
transmission rate determining means for determining one of a plurality of transmission rates on the basis of a voice signal;
an IF synthesizer for generating an IF signal for modulating the voice signal;
modulation means for modulating the voice signal on the basis of the IF signal from the IF synthesizer;
a main synthesizer for generating an RF signal for frequency conversion;
frequency conversion means for frequency-converting the modulated voice signal based on the RF signal from the main synthesizer;
amplification means for amplifying and outputting the voice signal converted by the frequency conversion means; and
power supply means for supplying power at least to the IF synthesizer, the modulation means and the frequency conversion means at timings based on a transmission rate determined by the transmission rate determining means, and also based on periods required for settling the IF synthesizer and the main synthesizer.

The invention also provides a power supply control unit for use in a radio transmitter, including an IF synthesizer for generating an IF signal for modulating a voice signal, modulation means for modulating the voice signal on the basis of the IF signal from the IF synthesizer, a main synthesizer for generating an RF signal for frequency conversion, frequency conversion means for frequency-converting the modulated voice signal based on the RF signal from the main synthesizer, and amplification means for amplifying and outputting the voice signal converted by the frequency conversion means, comprising:
transmission rate determining means for determining one of a plurality of transmission rates on the basis of the voice signal; and
power supply means for supplying power at least to the IF synthesizer, the modulation means and the frequency conversion means at timings based on a transmission rate determined by the transmission rate determining means, and also based on periods required for settling the IF synthesizer and the main synthesizer.

The above-described radio transmitter or power supply control unit for use in the radio transmitter, according to the invention, can reduce the current consumption of not only the amplifiers but also the transmission system including synthesizers. They also create timings in light of the settling periods of the synthesizers, so that the synthesizers can operate in a stable manner during the transmission period, and supply power to the transmission system on the basis of the created timings. As a result, in particular, during a low rate transmission period, current consumption can be reduced while securing stable operations of the synthesizers.

The invention further provides a radio transmitter comprising:
transmission rate determining means for determining one of a plurality of transmission rates on the basis of a voice signal;
an IF synthesizer for generating an IF signal for modulating the voice signal;
modulation means for modulating the voice signal on the basis of the IF signal from the IF synthesizer;
a main synthesizer for generating an RF signal for frequency conversion;
frequency conversion means for frequency-converting the modulated voice signal based on the RF signal from the main synthesizer;
amplification means for amplifying and outputting the voice signal converted by the frequency conversion means;
first power supply means for supplying power at least to the IF synthesizer, the modulation means and the frequency conversion means at timings based on a transmission rate determined by the transmission rate determining means, and also based on a rising time of the IF synthesizer at the time of power on and a period required for settling variations in load on the main synthesizer; and
second power supply means for supplying power to the amplification means at timings based on the transmission rate determined by the transmission rate determining means, but different from the timings used in the first power supply means.

The invention yet further provides a power supply control unit for use in a radio transmitter, including an IF synthesizer for generating an IF signal for modulating a voice signal, modulation means for modulating the voice signal on the basis of the IF signal from the IF synthesizer, a main synthesizer for generating an RF signal for frequency conversion, frequency conversion means for frequency-converting the modulated voice signal based on the RF signal from the main synthesizer, and amplification means for amplifying and outputting the voice signal converted by the frequency conversion means, comprising:
transmission rate determining means for determining one of a plurality of transmission rates on the basis of the voice signal;
first power supply means for supplying power at least to the IF synthesizer, the modulation means and the frequency conversion means at timings based on a transmission rate determined by the transmission rate determining means, and also based on a rising time of the IF synthesizer at the time of power on and a period required for settling variations in load on the main synthesizer; and
second power supply means for supplying the amplification means at timings based on the transmission rate determined by the transmission rate determining means, but different from the timings used in the first power supply means.

The above-described radio transmitter or power supply control unit for use in the radio transmitter, according to the invention, supply power to the transmission system at timings based on a transmission rate in light of the states of the IF synthesizer and the main synthesizer of the transmission system, more specifically, in light of the rising time of the IF synthesizer at the time of power on, and the settling period of load fluctuations in the main synthesizer due to the rise of a buffer circuit, in order to stabilize the synthesizers during the transmission period. As a result, current consumption can be reduced while securing stable operations of the synthesizers.

Moreover, the invention also determines timings of supply of power to the amplifiers for executing signal amplification after frequency conversion. The current consumption of the entire radio transmitter can be reduced by supplying power to the transmission system including synthesizers, and to the amplifiers at different timings.

### Brief Description of Drawings

FIG. 1 is a block diagram illustrating a radio transmitter according to the invention;
FIG. 2 is a view illustrating examples of variable data rate transmissions through a CDMA channel according to the invention;
FIG. 3 is a timing chart showing the relationship between a power control bit used in the embodiment of the invention during a low rate transmission, the output of an amplifier power control signal generating section 20 and the output of a transmission system power control signal generating section 21; and
FIG. 4 is a block diagram illustrating a conventional radio transmitter.

### Best Mode for Carrying Out of the Invention

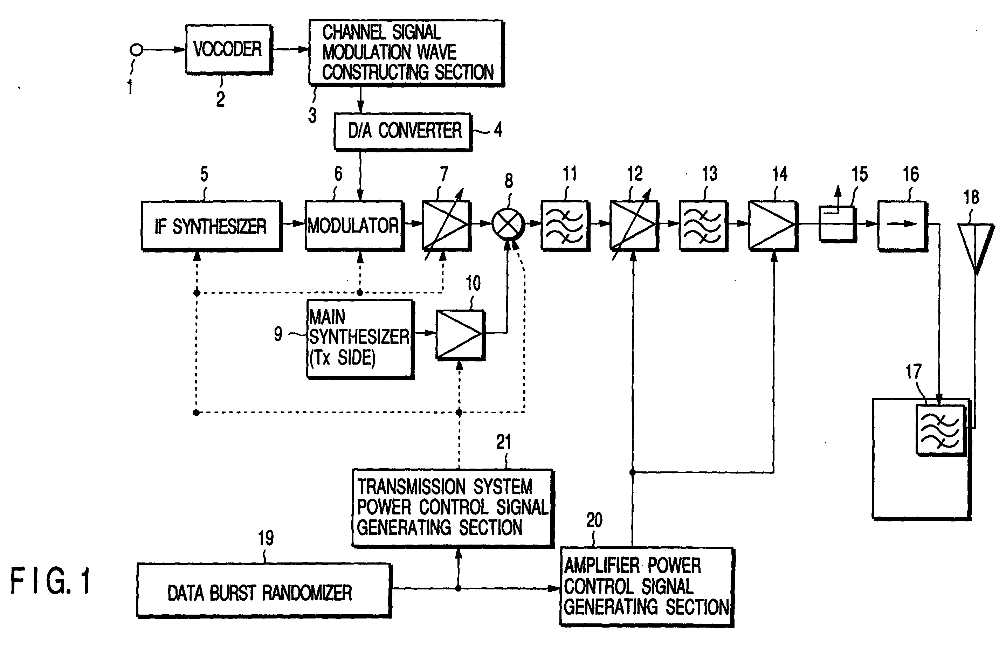

Referring to FIGS. 1 - 3, the embodiment of the invention will be described in detail.

FIG. 1 is a block diagram illustrating a radio transmitter according to the invention.

In this figure, the radio transmitter comprises a voice signal terminal 1, a vocoder 2 connected thereto, a channel signal modulation wave constructing section 3 and a D/A converter 4. The transmitter further comprises an IF synthesizer 5, a modulator 6 connected thereto, an IF_AGC 7, a frequency converter 8, a main synthesizer 9, a buffer amplifier 10, a filter 11, a D_AMP 12, a filter 13, a power amplifier (PA) 14, a coupler 15, an ISO 16, and an antenna shared device 17 to be connected to an antenna 18.

The radio transmitter also comprises a data burst randomizer 19, an amplifier power control signal generating section 20 connected thereto, and a transmission system power control signal generating section 21, and is adapted to supply power to each unit at predetermined timings.

The radio transmitter constructed as above operates as described below.

In FIG. 1, a voice signal is supplied to the vocoder 2 via the voice signal input terminal 1, where it is subjected to voice encoding. Then, the signal is supplied to the channel signal modulation wave constructing section 3, where it is subjected to convolution encoding, block interleave processing, Lb 64th orthogonal modulation/direct sequence method. After that, the resultant signal is subjected to D/A conversion in the D/A converter 4, and then to orthogonal modulation in the modulator 6 using an IF frequency created by the IF synthesizer 5. The modulated voice signal of the IF band is input to the IF_AGC 7, where it is appropriately amplified. The IF signal is input to the frequency converter 8.

In the frequency converter 8, a signal, obtained by appropriately amplifying an RF frequency signal that is created by the main synthesizer 9, is mixed with an IF signal created in the frequency converter 8, thereby outputting an RF signal.

This output is supplied to the filter 11, where it is subjected to band limitation. After that, the output is again subjected to appropriate amplification in the D_AMP 12, again to band limitation in the filter 13, and again to appropriate amplification in the PA 14, is passed through the coupler 15, the ISO 16 and the antenna shared device 17, and output from the antenna 18.

The output level of the antenna 18 widely ranges from +23 to -50 dBm in the case of a radio transmitter of the IS-95 system. Therefore, in this embodiment, the gain is adjusted by the three amplifiers 7, 12 and 14.

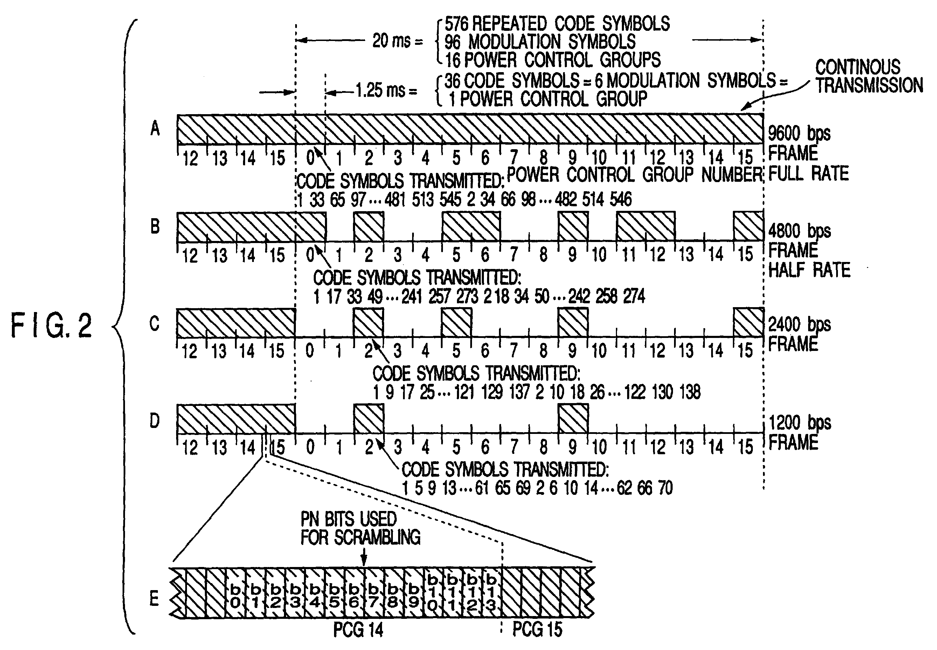

In the radio transmitter of the IS-95 system, an appropriate transmission rate is selected from a plurality of rates, as shown in FIG. 2, in accordance with the ratio of voiced/voiceless sound of the vocoder. The amplifier power control signal generating section 20 generates an amplifier power control signal corresponding to the transmission rate on the basis of a signal output from the data burst randomizer 19, and executes on/off control of the power supplies for the D AMP 12 and the PA 14 to reduce the current consumption.

The transmission system power control signal generating section 21, by which the present invention is characterized, executes, on the basis of the output signal of the data burst randomizer 19, power control for the IF synthesizer 5, the modulator 6, the IF_AGC 7, the buffer amplifier 10 and the frequency converter 8, which use the power supplies of the transmission system. The control timing employed in this control will be described in detail.

First, the variable data rate of the CDMA channel will be described with reference to the related drawings. FIG. 2 shows examples of transmission executed, in accordance with respective variable data rates, by the CDMA channel according to the embodiment of the invention. In the figure, A - D denote different transmission data rates. For example, as indicated in rate A, the to-be-transmitted data is grouped into frames of 20 msec.

In the CDMA system, on/off control is executed so that a particular symbol corresponding to a transmission data rate is transmitted and the other symbols are eliminated (time gating). Rate A uses a 9600 bps (full rate) frame, rate B a 4800 bps (half rate) frame, rate C a 2400 bps frame, rate D a 1200 bps frame, and rate E a PN long code.

In place of the above-mentioned transmission data rates, rate A = 14400 bps, rate B = 7200 bps, rate C = 3600 bps, and rate D = 1800 bps may be used.

In this on/off control, in accordance with the transmission data rate, the frame of 20 msec is divided into sixteen zones 0 - 15 of the same period (a power control group with one period of 1.25 msec is referred to as one "PCG"). Accordingly, during full rate transmission indicated by rate A, all symbols are transmitted, while during half rate (4800 bps or 7200 bps) transmission indicated by rate B, only half of the symbols are transmitted. Further, in the case of rate C or D lower than rate B, fewer symbols are transmitted.

Accordingly, in the case of, in particular, lower rate C or D, the frequency of power supply suppression in the amplifier power control signal generating section 20 or in the transmission system power control signal generating section 21 is higher than in the case of rate B, thereby realizing effective power saving.

In the above on/off control, whether a gate-on group containing to-be-transmitted symbols or a gate-off group containing not-to-be-transmitted symbols is assigned is determined by the data burst randomizer 19 shown in FIG. 1. The position of each gate-on group in one frame at each transmission rate is determined by pseudo random processing executed by a predetermined operation on the basis of PN codes (b0 - b13) of frame E as shown in FIG. 2. At each rate A - D in FIG. 2, the hatched portions indicate to-be-transmitted symbols.

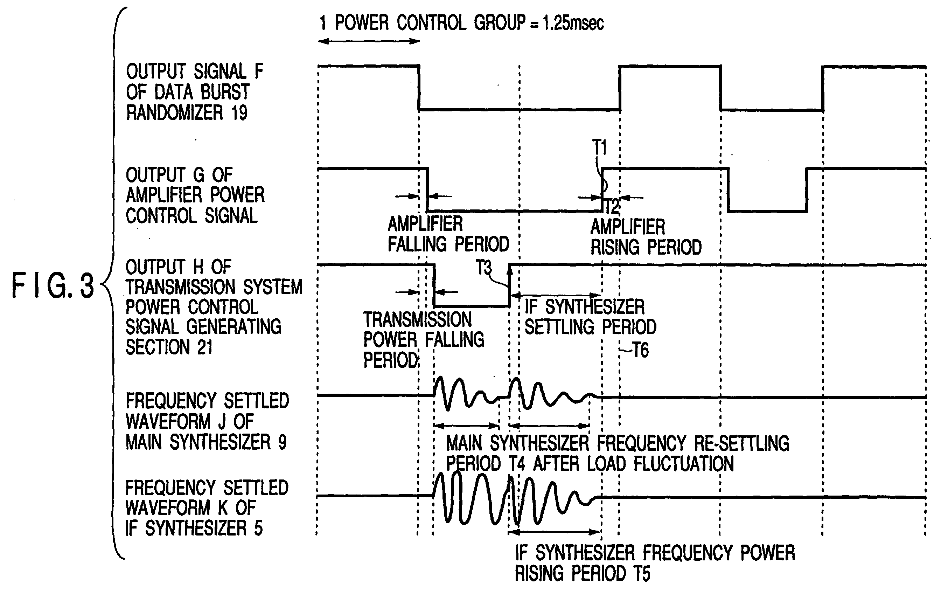

FIG. 3 is a timing chart illustrating the relationship between a power control bit, the output of the amplifier power control signal generating section 20 and the output of the transmission system power control signal generating section 21, assumed during low rate transmission in the embodiment of the invention. With reference to FIG. 3, a description will be given of the timing of an output H from the transmission system power control signal generating section 21, by which the present invention is characterized.

FIG. 3 shows a signal F output from the data burst randomizer 19, a signal G output from the amplifier power control signal generating section 20, a signal H output from the transmission system power control signal generating section 21, a frequency settled waveform J output from the main synthesizer 9 and a frequency converted waveform K output from the IF synthesizer 5.

In FIG. 3, the amplifier power control signal generating section 20 executes power control based on the output signal F of the data burst randomizer 19 in accordance with a selected transfer rate, to reduce the current consumption of the amplifiers 12 and 14. At this time, the rising period (T1) of the signal is arranged to be at a time point earlier by the falling period (T2) of the amplifiers.

To facilitate the control, it is desirable that the output H of the transmission system power control signal generating section 21 should be also controlled on the basis of the output signal F of the data burst randomizer 19. Actually, however, it is necessary to consider the frequency re-settling period (T4)(see the settled waveform J of the main synthesizer 9) of the main synthesizer 9 due to variations in load when the buffer amplifier 10 has been turned on, or the frequency re-settling period (T5)(see the settled waveform K of the IF synthesizer 5) of the IF synthesizer 5 to be turned on. In light of this, the output H of the transmission system power control signal generating section 21 is arranged to rise at a rising time point (T3). As a result, at a signal transmission time point (T6), the main synthesizer 9 and the IF synthesizer 5 are stabilized, which simultaneously enables reduction of current consumption and stable transmission.

Specifically, the transmission system power control signal generating section 21 of the invention turns on (at the time point T3) the power supplies of the transmission system earlier than the power supplies of the amplifiers by the time corresponding to the frequency re-settling period of the main synthesizer 9 and the rising time of the IF synthesizer 5 at the time of power on, in order to turn off all power supplies for the transmission system other than the amplifiers 12 and 14 during the no-symbol-transmission period of the low rate transmission. After that, the section 21 first turns off the power supplies of the amplifiers 12 and 14, and then the power supplies of the transmission system other than the amplifiers 12 and 14.

Supposing that the period required for re-settling the main synthesizer 9 and the IF synthesizer 5 is about 1 msec, 1 PCG is 1.25 msec, and hence it is difficult to turn on or off the power supplies of the transmission system during one PCG during which no symbol is transmitted. Accordingly, it is desirable that the power supplies of the transmission system should be mainly turned on or off during transmission in which the no-symbol-transmission period continues for two PCGs or more.

Furthermore, as described referring to FIG. 2, whether a gate-on group or a gate-off group is assigned is determined by the data burst randomizer 19, and the position of each gate-on group in one frame at each transmission rate is determined by pseudo random processing executed on the basis of PN codes.

Therefore, it is possible that no symbol transmission will continue for two PCGs even at the half rate. At a transmission rate lower than the half rate, the power supplies of the transmission system are on/off controlled each time no symbol transmission continues for two PCGs or more. This can reduce power consumption during no symbol transmission.

### Industrial Applicability

As described above in detail, the invention provides a radio transmitter comprising: transmission rate determining means for determining one of a plurality of transmission rates on the basis of a voice signal; an IF synthesizer for generating an IF signal for modulating the voice signal; modulation means for modulating the voice signal on the basis of the IF signal from the IF synthesizer; a main synthesizer for generating an RF signal for frequency conversion; frequency conversion means for frequency-converting the modulated voice signal based on the RF signal from the main synthesizer; amplification means for amplifying and outputting the voice signal converted by the frequency conversion means; and power supply means for supplying power at least to the IF synthesizer, the modulation means and the frequency conversion means at timings based on a transmission rate determined by the transmission rate determining means, and also based on periods required for settling the IF synthesizer and the main synthesizer.

The invention also provides a power supply control unit for use in a radio transmitter, including an IF synthesizer for generating an IF signal for modulating a voice signal, modulation means for modulating the voice signal on the basis of the IF signal from the IF synthesizer, a main synthesizer for generating an RF signal for frequency conversion, frequency conversion means for frequency-converting the modulated voice signal based on the RF signal from the main synthesizer, and amplification means for amplifying and outputting the voice signal converted by the frequency conversion means, comprising: transmission rate determining means for determining one of a plurality of transmission rates on the basis of the voice signal; and power supply means for supplying power at least to the IF synthesizer, the modulation means and the frequency conversion means at timings based on a transmission rate determined by the transmission rate determining means, and also based on periods required for settling the IF synthesizer and the main synthesizer.

Since, as described above, the transmission power supplies are turned on and off in accordance with a transmission rate in light of, for example, the re-settling period of each synthesizer, the invention can provide a radio transmitter and a power supply control unit incorporated therein, wherein current consumption of not only the amplifiers but also the transmission system is reduced, while securing stable operations of the synthesizers, thereby realizing longer call duration.

## Claims

1. A radio transmitter comprising:
transmission rate determining means for determining one of a plurality of transmission rates on the basis of a voice signal;
an IF synthesizer for generating an IF signal for modulating the voice signal;
modulation means for modulating the voice signal on the basis of the IF signal from the IF synthesizer;
a main synthesizer for generating an RF signal for frequency conversion;
frequency conversion means for frequency-converting the modulated voice signal based on the RF signal from the main synthesizer;
amplification means for amplifying and outputting the voice signal converted by the frequency conversion means; and
power supply means for supplying power at least to the IF synthesizer, the modulation means and the frequency conversion means at timings based on a transmission rate determined by the transmission rate determining means, and also based on periods required for settling the IF synthesizer and the main synthesizer.

2. A radio transmitter comprising:
transmission rate determining means for determining one of a plurality of transmission rates on the basis of a voice signal;
an IF synthesizer for generating an IF signal for modulating the voice signal;
modulation means for modulating the voice signal on the basis of the IF signal from the IF synthesizer;
a main synthesizer for generating an RF signal for frequency conversion;
frequency conversion means for frequency-converting the modulated voice signal based on the RF signal from the main synthesizer;
amplification means for amplifying and outputting the voice signal converted by the frequency conversion means;
first power supply means for supplying power at least to the IF synthesizer, the modulation means and the frequency conversion means at timings based on a transmission rate determined by the transmission rate determining means, and also based on a rising time of the IF synthesizer at the time of power on and a period required for settling variations in load on the main synthesizer; and
second power supply means for supplying power to the amplification means at timings based on the transmission rate determined by the transmission rate determining means, but different from the timings used in the first power supply means.

3. The radio transmitter according to claim 1, further comprising:
IF automatic gain amplification means for amplifying an output of the modulation means;
a buffer amplifier for amplifying the RF signal generated by the main synthesizer; and
second power supply means for supplying power to the IF automatic gain amplification means and the buffer amplifier at the timings.

4. The radio transmitter according to claim 2, further comprising:
IF automatic gain amplification means for amplifying an output of the modulation means;
a buffer amplifier for amplifying the RF signal generated by the main synthesizer; and
second power supply means for supplying power to the IF automatic gain amplification means and the buffer amplifier at the timings.

5. A power supply control unit for use in a radio transmitter, including an IF synthesizer for generating an IF signal for modulating a voice signal, modulation means for modulating the voice signal on the basis of the IF signal from the IF synthesizer, a main synthesizer for generating an RF signal for frequency conversion, frequency conversion means for frequency-converting the modulated voice signal based on the RF signal from the main synthesizer, and amplification means for amplifying and outputting the voice signal converted by the frequency conversion means, comprising:
transmission rate determining means for determining one of a plurality of transmission rates on the basis of the voice signal; and
power supply means for supplying power at least to the IF synthesizer, the modulation means and the frequency conversion means at timings based on a transmission rate determined by the transmission rate determining means, and also based on periods required for settling the IF synthesizer and the main synthesizer.

6. A power supply control unit for use in a radio transmitter, including an IF synthesizer for generating an IF signal for modulating a voice signal, modulation means for modulating the voice signal on the basis of the IF signal from the IF synthesizer, a main synthesizer for generating an RF signal for frequency conversion, frequency conversion means for frequency-converting the modulated voice signal based on the RF signal from the main synthesizer, and amplification means for amplifying and outputting the voice signal converted by the frequency conversion means, comprising:
transmission rate determining means for determining one of a plurality of transmission rates on the basis of the voice signal;
first power supply means for supplying power at least to the IF synthesizer, the modulation means and the frequency conversion means at timings based on a transmission rate determined by the transmission rate determining means, and also based on a rising time of the IF synthesizer at the time of power on and a period required for settling variations in load on the main synthesizer; and
second power supply means for supplying power to the amplification means at timings based on the transmission rate determined by the transmission rate determining means, but different from the timings used in the first power supply means.

7. The power supply control unit according to claim 5, further comprising:
IF automatic gain amplification means for amplifying an output of the modulation means;
a buffer amplifier for amplifying the RF signal generated by the main synthesizer; and
second power supply means for supplying power to the IF automatic gain amplification means and the buffer amplifier at the timings.

8. The power supply control unit according to claim 6, further comprising:
IF automatic gain amplification means for amplifying an output of the modulation means;
a buffer amplifier for amplifying the RF signal generated by the main synthesizer; and
second power supply means for supplying power to the IF automatic gain amplification means and the buffer amplifier at the timings.

9. A radio transmitter comprising:
transmission rate determining means for determining one of a plurality of transmission rates on the basis of a voice signal;
an IF synthesizer for generating an IF signal for modulating the voice signal;
modulation means for modulating the voice signal on the basis of the IF signal from the IF synthesizer;
a main synthesizer for generating an RF signal for frequency conversion;
frequency conversion means for frequency-converting the modulated voice signal based on the RF signal from the main synthesizer;
amplification means for amplifying and outputting the voice signal converted by the frequency conversion means; and
power supply means for supplying power to at least one of the IF synthesizer, the modulation means and the frequency conversion means at timings based on a transmission rate determined by the transmission rate determining means, and also based on periods required for settling the IF synthesizer and the main synthesizer.

10. A radio transmitter comprising:
transmission rate determining means for determining one of a plurality of transmission rates on the basis of a voice signal;
an IF synthesizer for generating an IF signal for modulating the voice signal;
modulation means for modulating the voice signal on the basis of the IF signal from the IF synthesizer;
a main synthesizer for generating an RF signal for frequency conversion;
frequency conversion means for frequency-converting the modulated voice signal based on the RF signal from the main synthesizer;
amplification means for amplifying and outputting the voice signal converted by the frequency conversion means; and
power supply means for supplying power to one of the IF synthesizer, the modulation means and the frequency conversion means at timings based on a transmission rate determined by the transmission rate determining means, and also based on periods required for settling the IF synthesizer and the main synthesizer, the power supply means also supplying power to the amplification means at timings based on the transmission rate determined by the transmission rate determining means, but different from the timings of supplying power to one of the IF synthesizer, the modulation means and the frequency conversion means.
